# EUROPEAN PATENT SPECIFICATION

(11) **EP 3 410 332 B1**
(45) Date of publication and mention of the grant of the patent: **08.07.2020**
(21) Application number: 18174972.2
(22) Date of filing: 29.05.2018
(51) Int. Cl.: G06F 21/34, G06F 21/36, H04L 9/32, H04L 29/06, H04W 12/06, G09C 5/00, G06Q 20/32, G06Q 20/40

(54) **A SYSTEM AND METHOD FOR TRANSFERRING DATA TO AN AUTHENTICATION DEVICE**
SYSTEM UND VERFAHREN ZUR ÜBERTRAGUNG VON DATEN AN EINE AUTHENTIFIZIERUNGSVORRICHTUNG
SYSTÈME ET PROCÉDÉ DE TRANSFERT DE DONNÉES VERS UN DISPOSITIF D'AUTHENTIFICATION

(30) Priority: 29.05.2017 EP 17020229
(43) Date of publication of application: 05.12.2018
(73) Proprietor: OneSpan International GmbH, 8152 Glattbrugg (CH)
(72) Inventor: JOLY, Bernard, 3360 Cenac (FR)
(74) Representative: Beck, Michaël Andries T.

(56) References cited:
- WO-A2-2016/030893
- DE-A1-102013 016 338
- US-A1- 2015 371 214
- US-B1- 8 661 254

## Description

### Field of the invention

The invention relates to securing remote access to computers and applications and remote transactions over computer networks. More in particular the invention relates to transferring data to an authentication device.

### Background of the invention

As remote access of computer systems and applications grows in popularity, the number and variety of transactions which are accessed remotely over public networks such as the Internet has increased dramatically. This popularity has underlined a need for security; in particular: how to ensure that people who are remotely accessing a (remote) application are who they claim they are, how to ensure that transactions being conducted remotely are initiated by legitimate individuals, and how to ensure that transaction data have not been altered before being received at a remote application.

In some cases, a user may be accessing and interacting with a remote application using for example a client computing device. The client computing device may comprise a user's personal computing device such as a user's smartphone, tablet or Personal Computer (PC). The client computing device may be connected over a network such as the internet to a remote server computer that may be hosting the remote application. The user may for example use the client computing device to login to the remote application and/or to submit a transaction request to the remote application. In what follows the client computing device may also be referred to as the access device.

In some cases, the interaction between the user and the remote application may be secured by the usage of a dynamic credential. For example at some point during the interaction (e.g., at login or when the user submits a transaction request) the user may be required to provide a dynamic credential to the remote application that the user is accessing. In some cases, such a dynamic credential may be generated by a personal authentication device that may be associated with the user and the generated dynamic credential may be sent to the remote application. In the remainder of this description such a personal authentication device may also be referred to simply as an authentication device. Upon receipt of the dynamic credential the remote application may then verify the dynamic credential that it received and may, for example, grant access to the user or execute the requested transaction on condition that the verification of the received dynamic credential was successful.

In some cases, the dynamic credential may be generated using a cryptographic algorithm that is parameterized with a secret data element, such as for example a secret cryptographic key. This secret data element may be associated with the user whereby the value of the secret data element may be different for different users. In some cases, the dynamic credential may be generated by cryptographically combining the value of a dynamic variable with the value of the secret data element that is associated with the user.

In some cases, the dynamic variable may be a time-based variable, such as for example the time provided by a clock. In some cases, the dynamic variable may be a challenge-based variable that may be based on a challenge that for example may be provided by the remote application. In some cases, the dynamic variable may be an event-based variable. For example in some cases, the dynamic variable may comprise a value that changes each time a certain event (such as the generation of dynamic credential using the value of the dynamic variable) occurs. For example, in some cases the event-based dynamic variable may comprise or may be based on a counter that is incremented each time on the occurrence of a certain event such as the generation of the dynamic credential. In some cases, the dynamic variable may be based on data representing a user's transaction request. In some cases, the dynamic variable may be or may comprise any combination of the above types of dynamic variables.

In some cases, the dynamic credential may comprise a dynamic password. If the dynamic credential is cryptographically linked to transaction data that characterize the transaction, then the dynamic credential may also be referred to as a signature or transaction data signature.

An algorithm to generate a dynamic credential may be based on symmetric cryptographic algorithms, such as the Advanced Encryption Standard (AES) algorithm, and/or on asymmetric cryptographic algorithms, such as the Rivest-Shamir-Adleman (RSA) algorithm. An algorithm to generate a dynamic credential may be based on cryptographic encryption/decryption algorithms (such as the Advanced Encryption Standard (AES) or RSA), and/or on algorithms to generate Message Authentication Codes (MAC), and/or on cryptographic one-way functions, and/or on cryptographic hashing or digital digest algorithms (such as for example one of the algorithms of the Secure Hash Algorithms (SHA) family of cryptographic hash functions or the MD5 algorithm), and/or cryptographic keyed hashing algorithms (such as the keyed-hash message authentication code HMAC-SHA1 or HMAC-MD5).

In some cases, the user's personal authentication device may be associated with the user. In some cases, the user's personal authentication device may comprise a hardware device such as for example a smart card or an authentication token. In some cases, the user's personal authentication device may be fully dedicated to providing the authentication and data signature functions as described above

In some cases the user's personal authentication device may consist of a single electronic device. In some cases the user's personal authentication device may comprise the combination of a (removable) smart card and a smart card reader. In some cases the smart card is adapted to store one or more cryptographic keys that may be used in a cryptographic algorithm for the generation of a dynamic credential. In some cases, the smart card may not allow the stored secret keys to be read by an entity external to the smart card. In some cases the smart card may be further adapted to perform a cryptographic algorithm parameterized with one or more of these stored keys as part of the generation of a dynamic credential. In some cases a dynamic credential may be generated essentially by the smart card performing a cryptographic algorithm parameterized with one or more of these stored keys. In other cases the dynamic credential may be generated by a cryptographic algorithm that may be performed partially by the smart card and partially by the smart card reader. In some cases the smart card may be EMV (Europay-Mastercard-VISA) compliant or compatible. In some cases the smart card reader may be CAP (Chip Authentication Programme) compliant or compatible.

In some cases, the user's personal authentication device may be adapted to store a secret key and to perform a cryptographic algorithm that is parameterized with the stored secret key to generate a cryptographic result whereby the dynamic credential is generated as a function of this generated cryptographic result. In some cases the personal authentication device may receive one or more data values and use these received data values as input variables for the aforementioned cryptographic algorithm. In some embodiments the personal authentication device may manage an internal dynamic variable, such as a time value provided by a clock that may be comprised in the personal authentication device or a counter that may be stored in the personal authentication device's non-volatile memory and that the personal authentication device may increment each time that it performs the aforementioned cryptographic algorithm.

In some cases, the authentication device may use data that it receives from or through the user's client computing device in the generation of a dynamic credential. For example, the authentication device may receive a challenge (which may have been generated by the remote application) from the user's client computing device and use the challenge as input data for a cryptographic algorithm to compute a response which may be comprised in the dynamic credential, or the authentication device may receive transaction data representing a transaction request that the user wants to submit to the remote application and use that transaction data as input data for a cryptographic algorithm to compute an (electronic) signature which may be comprised in the dynamic credential.

Various solutions may be used to transfer input data that the authentication device may use for the generation of a dynamic credential from the user's client computing device to the user's personal authentication device.

### Manual data transfer

In some solutions, transfer of input data from the user's client computing device to the user's personal authentication device may be done by the user manually entering data into the authentication device using a user input interface (such as for example a keyboard) of the authentication device. Transfer of data from the authentication device to the computing device (such as for example a dynamic credential generated by the authentication device) may be done by the user receiving output data from a user output interface of the authentication device and the user manually copying and forwarding the output data to the client computing device. For example, output data may be displayed on a display of the authentication device to be manually copied and forwarded to the client computing device by the user.

### USB or Bluetooth connection

In other solutions the user's personal authentication device may be locally connected to the user's client computing device through a local wired or wireless digital data connection such as a USB (Universal Serial Bus) connection of a Bluetooth® connection. The terminology 'local' in this context implies that both the user's personal authentication device and the user's client computing device are located in the immediate vicinity of the user such that the user can physically interact with both the personal authentication device and the client computing device (i.e., the user receiving output data from a user output interface of the personal authentication device and/or the client computing device and/or the user providing input data to a user input interface of the personal authentication device and/or the client computing device, such as for example reading text on a display and/or entering data on a keyboard). The terminology 'local digital data connection' in this context furthermore implies a data connection whereby digital data and digital messages are being encoded in electrical or electro-magnetic signals that are emitted and/or received by the user's client computing device through specific components of the computing device that are not comprised in the user interface of the computing device. The computing device and the authentication device may use this local connection to exchange data, which may include transferring from the user's client computing device to the user's personal authentication device input data that the authentication device may use for the generation of a dynamic credential. In some cases, the same local connection may also be used to transfer data from the authentication device to the computing device (such as for example a dynamic credential generated by the authentication device).

### 2D-barcode

In still other solutions the user's client computing device may transfer input data to the user's personal authentication device by displaying on its display a 2D-barcode that is encoded with a message comprising the input data to be transferred, and the authentication device may comprise a camera and may be adapted to capture a 2D-barcode displayed on the display of a computing device and to decode the 2D-barcode and extract the input data from the 2D-barcode. In some cases, data to be transferred from the authentication device to the computing device (such as for example a generated dynamic credential) may be displayed on a display of the authentication device to be manually copied and forwarded to the client computing device by the user.

German patent application publication no. DE 10 2013 016338 A1 in the name of Giesecke & Devrient GmbH discloses a method, devices, and a system for authenticating a user of a computer unit with respect to a server. The method comprises the following steps: requesting password-protected access to the server by means of the computer unit; outputting a code containing a URL address of the server by means of the computer unit; capturing the code and extracting the URL address of the server from the code by means of a mobile terminal; determining a password stored in a security element of the mobile terminal in connection with the URL address of the server; transmitting the password to an authentication server; retrieving the password from the authentication server by means of the computer unit; and authenticating the user of the computer unit with respect to the server by means of the password.

US patent application publication no. US 2015/371214 A1, assigned to Bundesdruckerei GmbH, discloses a method for authenticating a user to a machine: generating a challenge by the machine, generating a first pattern, in which the challenge is coded, by the machine, displaying the first pattern on a display device of the machine, optically recording the first pattern by a user device, decoding the first pattern to receive the challenge by the user device, generating a response to the challenge by the user device, generating a second pattern, in which the response is coded, by the user device, displaying the second pattern on a display device of the user device, optically recording the second pattern by the machine, decoding the second pattern to receive the response by the machine, checking the correctness of the response by the machine, and, on the condition that the response is correct, fulfilling a function by the machine.

The discussion of the background to the invention herein is included to explain the context of the invention. This shall not be taken as an admission that any of the material discussed above was published, known or part of the common general knowledge at the priority date of this application.

### Disclosure of the invention

### Technical problem

The inventors have realized that most authentication devices only support one input data transfer mechanism to transfer input data from a user's access device to that user's personal authentication device, and that also many remote applications only support a single input data transfer mechanism to transfer input data from a user's access device to that user's personal authentication device. The inventors have further realized that in such circumstances a change in the architecture of a remote application such that it no longer supports a particular data transfer mechanism and instead uses another, possibly incompatible, data transfer mechanism, may have the effect that existing authentication devices that until that moment were in use by users of the remote application may no longer be useable with that remote application. This may cause inconvenience for the users and additional costs to replace the now obsolete authentication devices.

In particular, most authentication devices relying on a local wired or wireless digital data connection with the user's access device to obtain input data are not equipped with the capabilities and components (such as a camera) to capture a 2D-barcode that is being displayed on the display of the user's access device. If a remote application was supporting an input data transfer mechanism that is based on a local wired or wireless digital data connection between the user's access device and the user's personal authentication device, and the architecture of the remote application is changed to henceforth no longer support that local digital data connection but instead rely on an input data transfer mechanism that is based on the displaying on the display of the user's access device of a 2D-barcode that may be encoded with input data for the user's personal authentication device, then users may no longer be able to successfully use their existing authentication devices that require a local wired or wireless digital data connection.

What is needed is a solution for using a personal authentication device that is not capable of capturing a 2D-barcode that is being displayed on the display of the user's access device when the remote application server assumes that the user has a personal authentication device that is capable of capturing a 2D-barcode.

### Technical solution

One solution to the aforementioned problem is the invention described in the remainder of this description.

In some aspects of the invention, the user's access device comprises a virtual scanner software component.

The virtual scanner software component may be adapted to emulate, in cooperation with a user's personal authentication device that is not capable of capturing a 2D-barcode, a personal authentication device that is capable of capturing a 2D-barcode.

The virtual scanner software component may be adapted to capture a 2D barcode that may have been received by the access device from a remote application and/or that may be displayed on a display of the access device. The 2D barcode may have been encoded, for example by the remote application, with data to be transferred to an authentication device capable of capturing and decoding the 2D barcode. The virtual scanner software component may be adapted to decode the captured 2D barcode. In some embodiments the virtual scanner software component may be adapted to extract data from the 2D barcode to be transferred to an authentication device. The virtual scanner software may be adapted to generate input data as a function of the extracted data. In some embodiments the input data may comprise the extracted data entirely or partially. In some embodiments the input data may comprise a reformatting of a part or all of the extracted data.

The virtual scanner software component may be further adapted to transfer the input data to a personal authentication device of the user through an input data transfer mechanism that is supported by the personal authentication device and that is different from the input data transfer mechanism based on scanning 2D barcodes. For example the user's personal authentication device may be locally connected to the access device through a local wired or wireless digital data connection (such as a USB or Bluetooth® connection), and the virtual scanner software component may be adapted to transfer the input data, such as data that it has extracted from the 2D barcode, to the user's personal authentication device over the local wired or wireless digital data connection. In some embodiments the virtual scanner software component may be adapted to establish the local wired or wireless digital data connection with the user's personal authentication device. For example, in some embodiments the user's personal authentication device may comprise a connected smart card reader that is connected to the user's access device for example through a USB connection. The virtual scanner software component may be adapted to communicate and exchange data with the connected smart card reader. The virtual scanner software component may be adapted to generate one or more smart card commands and send the generated one or more smart card commands to a smart card that may be inserted in the connected smart card reader, and to receive from the connected smart card reader smart card responses to these smart card commands that may have been generated by the inserted smart card in response to these smart card commands. The virtual scanner software component may further be adapted to generate one or more smart card reader commands and send the one or more generated smart card reader commands to the connected smart card reader, and to receive from the connected smart card reader one or more smart card reader responses that may have been generated by the smart card reader in response to these smart card reader commands.

The virtual scanner software component may be further adapted to transfer the input data to the user's personal authentication device encoded or embedded in one or more smart card commands or smart card reader commands.

The virtual scanner software component may be adapted to use a smart card API (Application Programming Interface), such as for example the PC/SC (Personal Computer/Smart Card) API, to exchange data such as the aforementioned commands and responses with the connected smart card reader. The virtual scanner software component may be adapted to use a USB Smart Card Class driver to communicate and exchange data such as the aforementioned commands and responses with the connected smart card reader. For example, the virtual scanner software component may be adapted to use a CCID (Chip Card Interface Device) driver to communicate with the connected smart card reader.

The user's personal authentication device may be adapted to receive over the local wired or wireless digital data connection the input data generated or extracted from the 2D barcode by the virtual scanner software component. The user's personal authentication device may be further adapted to use the received input data to generate authentication data which may comprise a dynamic credential.

In some embodiments the user's personal authentication device may be further adapted to communicate the generated authentication data or dynamic credential to the user, e.g., by displaying the generated dynamic credential on a display of the user's personal authentication device. In some embodiments the user's personal authentication device may be further adapted to communicate, e.g., over the local wired or wireless digital data connection, the generated authentication data or dynamic credential to the virtual scanner software component.

In some embodiments, the virtual scanner software component may be adapted to obtain a dynamic credential. In some embodiments, the virtual scanner software component may be adapted to obtain or receive, for example over the local wired or wireless digital data connection, authentication data or a dynamic credential generated by the user's personal authentication device. In some embodiments the virtual scanner software component may receive the authentication data or dynamic credential encoded or embedded in one or more of the aforementioned smart card responses or smart card reader responses.

In some embodiments, the virtual scanner software component may be further adapted to obtain or generate a dynamic credential as a function of authentication data generated by and received from the user's personal authentication device. For example in some embodiments the virtual scanner software may be adapted to obtain a dynamic credential by selecting a part of the received authentication data and reformatting the selected part of the received authentication data. In some embodiments, the virtual scanner software component may be adapted to obtain a dynamic credential by performing a cryptographic algorithm (such as an algorithm to generate an electronic signature or Message Authentication Code over for example a set of transaction data), whereby the cryptographic algorithm may be parameterized with a cryptographic key that may be derived from the received authentication data.

In some embodiments the virtual scanner software component may be further adapted to present the obtained dynamic credential to the user, e.g., by displaying the obtained dynamic credential on a display of the user's access device that the virtual scanner software component is running on. The user may then forward the presented dynamic credential to the remote application, e.g., by copying the presented dynamic credential into a web form.

In some embodiments, the virtual scanner software component may be further adapted to forward the obtained dynamic credential to the remote application. For example, in some embodiments the virtual scanner software component may be adapted to send a message that comprises the obtained dynamic credential over a computer network such as the internet to server computer hosting the remote application.

In some embodiments, the virtual scanner software component may comprise a software component that may be executed or run by the access device. In some embodiments, the virtual scanner software component may take the form of a native application, or a browser plug-in or browser extension, or a java component, or a service or a hook on a video driver of the access device. In some embodiments, the virtual scanner software component may comprise a snipping tool that may be adapted to capture a part of the screen of the access device. In some embodiments the virtual scanner software component may be adapted to capture a screenshot of the display of the access device and the virtual scanner software component may be adapted to detect the presence in the screenshot of a D2 barcode that is being displayed on the display of the access device and may be further adapted to extract the displayed 2D barcode from the screenshot and decode the extracted 2D barcode.

In some embodiments, the virtual scanner software component may be running permanently, for example as a service permanently running on the access device in the background or as a hook on a driver. In some embodiments the virtual scanner software component may be activated manually by the user. In some embodiments, the virtual scanner software component may be activated automatically by the occurrence of a specific event. For example, in some embodiments the virtual scanner software component may be activated automatically if the access device receives a message with a specific MIME type, or if the access device receives a web page containing a specific HTML tag. In some embodiments the virtual scanner software component may be activated automatically by a component embedded in a web page such as for example a java script component.

In some embodiments, the virtual scanner software component may be adapted to capture, continuously or upon being triggered by a specific event, a part or the entirety of what is being displayed on a display of the access device and to analyse the captured part of the display to search in the captured part of the display for the occurrence of a 2D barcode in an appropriate format. In some embodiments, the virtual scanner software component may be adapted, upon detecting the presence of a 2D barcode in an appropriate format, to decode the 2D barcode and extract payload data as explained in more detail elsewhere. In some embodiments, the virtual scanner software may be adapted to receive directions of the user to find or receive a 2D barcode to process. For example, in some embodiments a user might right-click on a 2D barcode embedded in a webpage and select the virtual scanner software component to direct the access device to activate the virtual scanner software component and to provide the 2D barcode to the virtual scanner software component.

In one aspect of the invention, a method is provided to secure a user's interaction with a remotely accessible computer-based application. In some embodiments, the method may comprise performing at a client computing device one or more or all of the various actions of one of the virtual scanner software components described above.

In some embodiments, the method may comprise performing at a client computing device the steps of: capturing a 2D-barcode that has been received by the client computing device or that is being displayed on a display of the client computing device; extracting message data from the captured 2D-barcode; exchanging commands and responses with a user's personal authentication device; determining input data; transferring said determined input data to said user's personal authentication device. In some embodiments, the input data may be determined as a function of the extracted message data. In some embodiments transferring the input data may be done by sending one or more commands from the client computing device to the personal authentication device.

In some embodiments, the user's personal authentication device is locally connected to the client computing device through a local wired or wireless digital data connection. In some embodiments, the local digital data connection is bidirectional. In some embodiments, said exchanging commands and responses with a user's personal authentication device may comprise sending the commands to the user's personal authentication device and receiving the responses from the user's personal authentication device over said digital data connection.

In some embodiments, the step of exchanging the commands and responses is done without the assistance or intervention of the user. In some embodiments, any assistance or intervention of the user that may be required to enable the possibility of exchanging the commands and responses, may be limited to a phase of establishing the local digital connection. Such required assistance may comprise for example connecting a cable to the user's personal authentication device and/or the client computing device, or entering a key for securing the connection in the user's personal authentication device and/or the client computing device.

In some embodiments, the method may comprise any of the previous methods wherein the input data may be comprised in the commands.

In some embodiments, the method may comprise any of the previous methods wherein exchanging commands and responses with a user's personal authentication device may comprise sending to the user's personal authentication device at least part of the extracted message data.

In some embodiments, the method may comprise any of the previous methods which may further comprise performing at the client computing device the steps of: receiving from the user's personal authentication device authentication data that have been generated by the user's personal authentication device; and obtaining a dynamic credential, wherein the dynamic credential is a function of the received authentication data. In some embodiments, the dynamic credential may be a function of at least a part of the extracted message data. In some embodiments, the dynamic credential may be comprised in the received authentication data. In some embodiments, the dynamic credential may be assembled or calculated at the client computing device as a function of the received authentication data. In some embodiments, the dynamic credential may be calculated at the client computing device using a cryptographic algorithm. In some embodiments the cryptographic algorithm may operate on or may be parameterized with a data element extracted or derived from the received authentication data. In some embodiments the cryptographic algorithm may (also) operate on at least a part of the extracted message data.

In some embodiments, the authentication data may be comprised in one or more of the responses.

In some embodiments, the authentication data may be generated by the user's personal authentication device using a cryptographic algorithm parameterized with a secret key that is stored in the personal authentication device.

In some embodiments, the authentication data may be generated by the user's personal authentication device as a function of said at least part of the extracted message data.

In some embodiments, the method may comprise any of the previous methods further comprising the step of making the obtained dynamic credential available for verification. In some embodiments, making the obtained dynamic credential available for verification may comprise displaying the obtained dynamic credential on the client computing device's display.

In some embodiments, making the obtained dynamic credential available for verification may comprise forwarding the obtained dynamic credential to the remotely accessible computer-based application.

In some embodiments some or all of the steps of the previously described methods that may be performed by the client computing device, may be performed by a software component running on the client computing device, such as one of the virtual scanner software components described elsewhere in this description.

In another aspect of the invention, a system is provided to secure a user's interaction with a remotely accessible computer-based application. In some embodiments the system may comprise a client computing device, such as any of the client computing devices described elsewhere in this description, and a personal authentication device, such as any of the authentication devices described elsewhere in this description. The personal authentication device may be locally connected to the client computing device through a local wired or wireless digital data connection.

In some embodiments, the client computing device may comprise a virtual scanner software component that, when executed on the client computing device, may cause the client computing device to perform some or all of the steps of any of the methods described above. In some embodiments, the personal authentication device may be adapted to perform any of the actions described, in the context of any of the previously described methods, as being performed by a personal authentication device. In some embodiments, the personal authentication device may be associated with a particular user. In some embodiments, the personal authentication device may store one or more data elements, e.g. one or more cryptographic keys, the values of which are specific or unique for the specific user that the personal authentication device is associated with.

In some embodiments the personal authentication device may be adapted to receive the input data from the virtual scanner software component over said local wired or wireless digital data connection, and generate authentication data using the received input data.

In some embodiments, the personal authentication device may be further adapted to return the generated authentication data to the client computing device, for example using the aforementioned local digital data connection between the personal authentication device and the client computing device.

In some embodiments, any of the steps of any of the methods described above may be performed by a virtual scanner software component such as one of the virtual scanner software components described elsewhere in this description.

In some embodiments the system may comprise a client computing device and a personal authentication device, wherein the client computing device may comprise a software component that, when executed on the client computing device, may cause the client computing device to: capture a 2D-barcode that has been received by the client computing device or that is being displayed on a display of the client computing device; extract message data from the captured 2D-barcode; exchange commands and responses with a user's personal authentication device; receive from the user's personal authentication device authentication data that have been generated by the user's personal authentication device; and obtain a dynamic credential wherein the dynamic credential is a function of at least part of the extracted message data and the received authentication data. In some embodiments, the personal authentication device may be adapted to: receive said commands from the client computing device and return said responses to the client computing device; generate the authentication data; and return the authentication data to said client computing device.

More details of these various embodiments are provided in the paragraphs below.

The invention is defined by the appended independent claims.

### Brief Description of the Drawings

The foregoing and other features and advantages of the invention will be apparent from the following, more particular description of embodiments of the invention, as illustrated in the accompanying drawings.
**Figure 1** schematically illustrates an authentication device according to an aspect of the invention.
**Figure 2** schematically illustrates an exemplary system according to an aspect of the invention.
**Figure 3** schematically illustrates an exemplary method according to an aspect of the invention.

### Detailed description

Some implementations of the present invention are discussed below. While specific implementations are discussed, it should be understood that this is done for illustration purposes only. A person skilled in the relevant art will recognize that other components and configurations may be used without parting from the spirit and scope of the invention. Various specific details are provided in order to enable a thorough understanding of the invention. However, it will be understood by a person skilled in the relevant art that the present invention may be practiced without these specific details. In other instances, well-known methods, procedures, components and circuits have not been described in detail so as not to obscure the present invention. Various modifications to the described embodiments will be apparent to persons skilled in the art, and the general principles of the embodiments described in detail below may be applied to other embodiments.

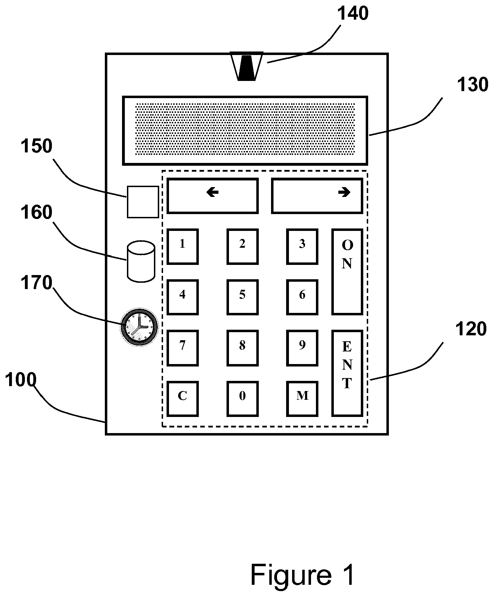

**Figure 1** schematically illustrates an exemplary electronic apparatus (100) according to an aspect of the invention. The apparatus of figure 1 comprises an authentication device. In some embodiments the authentication device is adapted to generate dynamic credentials on behalf of a user. In some embodiments the dynamic credentials generated by the authentication device may comprise for example one-time passwords and/or electronic signatures over for example transaction data and/or responses to challenges. In some embodiments the authentication device may comprise a smart card reader and a smart card.

### Processor (150) and memory (160).

The authentication device may comprise a digital data processing component **(150)** that may be adapted to execute a set of data processing instructions. In some embodiments the data processing component (150) may comprise for example one or more microprocessors, microcontrollers, Digital Signal Processor (DSP) chips, Field Programmable Gate Arrays (FPGA), etcetera. In some embodiments the digital data processing component may execute the instructions comprised in one or more pieces of software. These one or more pieces of software may for example comprise an operating system (such as for example Android or iOS) and/or an authentication application which may be adapted to generate dynamic credentials as explained in more details elsewhere in this description. In some embodiments the dynamic credentials generated by the authentication application may comprise for example one-time passwords and/or electronic signatures over for example transaction data and/or responses to challenges.

The authentication device may comprise a memory component (160) which may be coupled to the digital data processing component. In some embodiments the memory component may comprise a program memory component that is adapted to store software or firmware to be executed by the data processing component. For example, in some embodiments the software or firmware stored in the memory of the authentication device may comprise an operating system and/or an authentication application.

In some embodiments the memory component (160) may comprise a data memory component that is adapted to permanently or temporarily store data. In some embodiments the data memory component may be adapted to securely store secret data such as cryptographic keys or PIN or password reference data.

The memory component may for example comprise RAM (Random Access Memory) memory, ROM (Read-Only Memory) memory, EPROM (Erasable Programmable Read-Only Memory) memory, one-time programmable memory, flash memory, solid-state memory, a hard-disk, etc.

### User interface (120, 130)

In some embodiments the authentication device may comprise a user interface **(120, 130)** to interact with a user, e.g. to exchange data, information and/or commands with a user.

In some embodiments the authentication device's user interface may comprise an output user interface **(130)** for presenting information and/or data to a user of the authentication device. In some embodiments the output user interface may comprise for example a display (130) or an audio output interface. In some embodiments the authentication device's user interface may comprise an input user interface **(120)** for receiving inputs from a user such as for example input data (like a challenge or transaction data) or instructions (like a confirmation or cancellation) or a PIN. In some embodiments the input user interface may comprise for example a keyboard (120). In some embodiments the authentication device's user interface may comprise a touch screen which may be adapted to offer both the functions of a user output interface and a user input interface.

### Data input interface (140)

In some embodiments the authentication device may comprise a digital data input interface for (locally) connecting the authentication device for example to a user's client computing device or access device. In some embodiments the digital data input interface may be adapted to establish and maintain a digital connection between the authentication device and the user's client computing device or access device. In some embodiments, the digital connection may be bi-directional. In some embodiments, no assistance from a user is required, once the digital connection has been established, to exchange messages over the digital connection between the authentication device and the user's client computing device or access device. In some embodiments the digital data input interface may support a local wired or wireless digital data connection (such as a USB or Bluetooth® connection). In some embodiments the authentication device's digital data input interface may be adapted to receive (and/or send) digital data messages from (and/or to) a connected device such as the user's client computing device or access device.

In some embodiments the digital data input interface may comprise a wireless data communication interface. In some embodiments the wireless data communication interface may comprise an antenna. In some embodiments the wireless data communication interface may be adapted to receive and/or send a modulated radio signal encoded with a digital data message. The modulated radio signal may consist of electromagnetic waves with a frequency of less than 300 Gigahertz and more than 20 Kilohertz. For example in some embodiments the wireless data communication data interface may comprise a Bluetooth® interface. In other embodiments, the wireless data communication data interface may be adapted to support a wireless local area networking technology such as for example WiFi. In other embodiments, the wireless data communication interface may be adapted to support Near-field communication (NFC) communications.

In some embodiments the digital data input interface may comprise a wired data communication interface. In some embodiments the wired data communication interface may comprise a connector (for example a USB connector) for connecting a data cable (such as a USB cable) to connect the authentication device to for example a user's access device. In some embodiments the wired data communication interface may be adapted to receive a modulated electrical signal encoded with a digital data message. For example in some embodiments the wired data communication interface may comprise a USB interface.

In some embodiments the authentication device may be adapted to use the data input interface to receive a digital data message. In some embodiments the received digital data message may comprise data that the authentication device may use in the generation of a dynamic credential or authentication data. In some embodiments the digital data message may comprise transaction data and the authentication device may be adapted to retrieve the transaction data comprised in the digital data message and use the retrieved transaction data for further processing, e.g. to display to the user and/or to generate a corresponding dynamic credential or authentication data as is described in more detail elsewhere in this description.

### Generation of a dynamic credential or authentication data

The authentication device may be adapted to generate dynamic credentials or authentication data as explained in more detail elsewhere in this description. In some embodiments the data processing component (150) may be adapted to perform cryptographic calculations to generate the dynamic credentials or authentication data. In some embodiments the authentication device may be adapted to generate dynamic credentials or authentication data using cryptographic keys that may be stored permanently or temporarily in the memory component **(160)** or that the authentication device may derive from data stored permanently or temporarily in the memory component **(160).** In some embodiments the authentication device may be adapted to generate dynamic credentials or authentication data using data that is part of an instance of an authentication application stored in the memory component **(160).**

In some embodiments the authentication device may be adapted to generate dynamic credentials or authentication data using a dynamic variable that may comprise an internal value provided by the token. For example, in some embodiments the authentication device may comprise a clock **(170)** and the authentication device may use as an internal value the time value provided by that clock. In some embodiments the authentication device may maintain an event-related variable such as a counter and the authentication device may be adapted to use the value of that event-related variable as an internal value to generate a dynamic credential or authentication data and update the value of that event-related variable as a function of the current value (e.g. by incrementing or decrementing a counter value) on the occurrence of a specific event, for example, each time the authentication device uses the value of that counter to generate a dynamic credential or authentication data. For example, in some embodiments the updated value of the event-related variable may be calculated by applying a hash function to the current value of the event-related variable.

In some embodiments the authentication device may be adapted to generate dynamic credentials or authentication data using a dynamic variable that may comprise an external value provided to the authentication device. In some embodiments such an external value may comprise a challenge generated by a remote application or transaction data to be signed. In some embodiments the external value may be manually provided to the authentication device by the user by using the user input interface of the token. For example, the token may capture a challenge or transaction data the user may enter as a string of characters on a keyboard comprised in the authentication device. In some embodiments the external value is provided comprised in a message or command that is received by the authentication device or authentication application by means of the authentication device's data input interface.

In some embodiments the authentication device or authentication application may be adapted to present the generated dynamic credential to the user. For example, in some embodiments the authentication device may display the generated dynamic credential as a string of readable characters on the display of the authentication device. In some embodiments the string may comprise only decimal characters. In other embodiments the string may comprise alphanumerical characters.

In other embodiments, the authentication device may be adapted to send the generated dynamic credential or authentication data to an access device by means of the authentication device's data input interface over a digital connection between the authentication device and the access device.

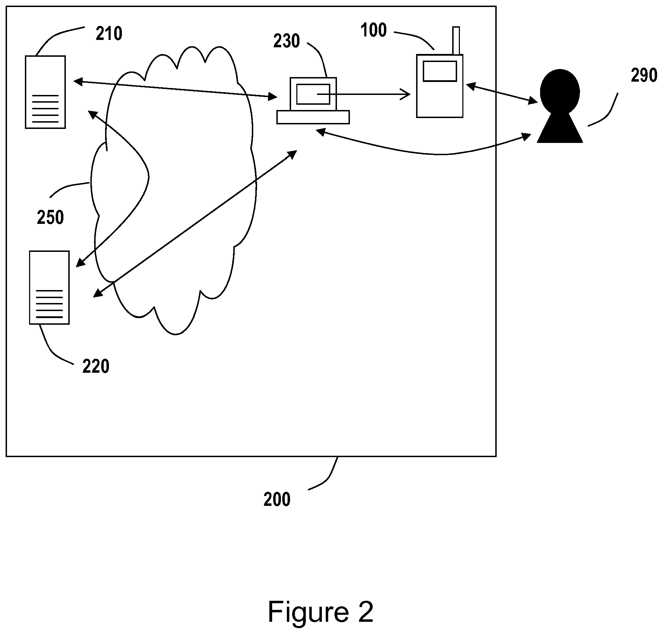

**Figure 2** schematically illustrates an exemplary system according to an aspect of the invention.

In one embodiment a system **(200)** according to the invention may comprise the following components:
One or more remote application server computers **(210).** The one or more remote application server computers **(210)** may host one or more remote applications which may be remotely accessible by one or more users of a plurality of users **(290).** The one or more remote applications may comprise for example any of the remote applications described elsewhere in this description. A remote application server computer **(210)** may for example comprise a web server. The one or more remote applications may be under control of one or more application providers. The one or more remote applications may be adapted to generate a 2D barcode encoded with a payload comprising data (such as a challenge or transaction data) to be transferred to a user's authentication device.

A plurality of client computing devices **(230)** that may allow one or more users of the plurality of users **(290)** to remotely access the one or more remote applications and hence may also be referred to as access devices. A client computing device or access device **(230)** may for example comprise a PC (personal computer), a laptop, a smartphone or a tablet computer. A client computing device or access device may comprise and run a virtual scanner software component as described elsewhere in this description.

A computer network **(250)** that connects the one or more application server computers **(210)** and the plurality of client computing devices or access devices **(230).** In some embodiments the computer network **(210)** may comprise the internet. In some embodiments the computer network **(210)** may comprise a public telephone network. In some embodiments the computer network **(210)** may comprise a wireless telephony network.

A plurality of authentication devices **(100)** as described in more detail elsewhere in this description, for example in connection to figure 1. The authentication devices **(100)** may be distributed among the plurality of users. In some embodiments the authentication devices **(100)** may be distributed among the users by the one or more application providers. In some embodiments the authentication devices may comprise a combination of a smart card reader and an inserted smart card.

Each of the plurality of authentication devices may be connected through a local wired or wireless digital data connection to one of the plurality of client computing devices **(230)** as explained in more detail elsewhere in this description.

One or more credential verification servers **(220).** In some embodiments each of the one or more credential verification servers **(220)** is connected to at least one of the one or more application servers **(210)** and may be configured to verify dynamic credentials that a remote application hosted by the one or more application servers **(210)** connected to the verification server may receive from users **(290)** interacting with such remote application. In some embodiments each of the application servers **(210)** may be connected to at least one of the one or more credential verification servers **(220)** and may be configured to forward to one of the connected one or more credential verification servers **(220)** dynamic credentials received by a remote application hosted by the application server **(210)** from a user **(290)** interacting with the remote application. Upon receiving a dynamic credential from a remote application, a credential verification server may retrieve data associated with the user and/or the authentication device **(100)** by which the dynamic credential has been generated and use that data to cryptographically verify the validity of the received dynamic credential. For example, in some embodiments the credential verification server may generate a reference value for the dynamic credential and compare the generated reference value with the received dynamic credential and consider the verification of the received dynamic credential successful if the received dynamic credential matches the generated reference value. In some embodiments the credential verification server may generate the reference value by applying a cryptographic algorithm to reference input data such as transaction data that the server may have received and/or the value of a server copy of a counter variable or event-related variable associated with the user and/or a time value. In some embodiments the credential verification server may parameterize this cryptographic algorithm with a cryptographic key which may comprise or which may be derived from a secret value associated with the user. The credential verification server **(220)** may return a signal to the remote application to indicate whether the verification was successful. If the signal indicates that the verification was successful, the remote application may use that information in deciding whether or not to grant access to the user or whether or not to perform a certain operation requested by the user (such as performing a transaction submitted by the user).

In some embodiments, a verification server and an application server may be comprised in the same server computer. In some embodiments, a verification server may be a component of an application server. For example, in some embodiments the verification server may be a verification software component, such as a software library, that may be integrated into an application software component that is part of the application server.

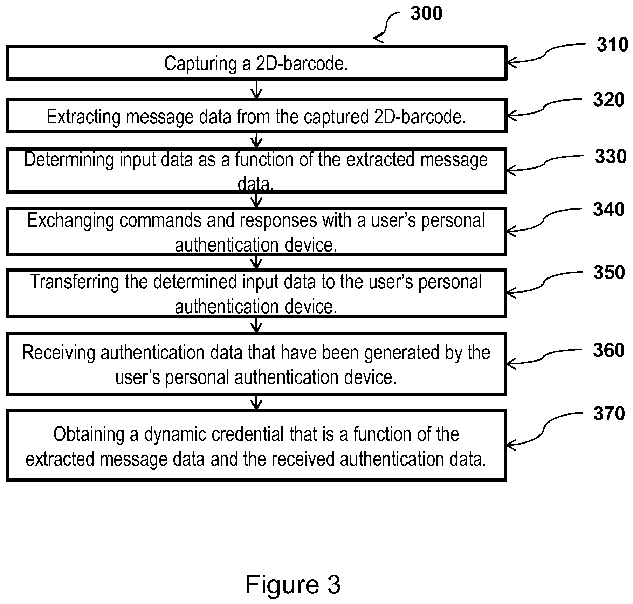

**Figure 3** schematically illustrates an exemplary method (300) to secure a user's interaction with a remotely accessible computer-based application according to an aspect of the invention.

In some embodiments the method may comprise the steps of: capturing (310), at a client computing device, a 2D-barcode that has been received by the client computing device or that is being displayed on a display of the client computing device; extracting (320), at a client computing device, message data from the captured 2D-barcode; determining (330), at a client computing device, input data, for example as a function of the extracted message data; exchanging (340), at a client computing device, commands and responses with a user's personal authentication device; transferring (350), at a client computing device, the determined input data to the user's personal authentication device; receiving (360), at a client computing device, from the user's personal authentication device authentication data that have been generated by the user's personal authentication device; obtaining (370), at a client computing device, a dynamic credential, wherein the dynamic credential may be a function of at least part of the extracted message data and the received authentication data.

A number of implementations have been described. Nevertheless, it will be understood that various modifications may be made. For example, elements of one or more implementations may be combined, deleted, modified, or supplemented to form further implementations. Accordingly, other implementations are within the scope of the appended claims. In addition, while a particular feature of the present invention may have been disclosed with respect to only one of several implementations, such feature may be combined with one or more other features of the other implementations as may be desired and advantageous for any given or particular application. While various embodiments of the present invention have been described above, it should be understood that they have been presented by way of example only, and not limitation. In particular, it is, of course, not possible to describe every conceivable combination of components or methodologies for purposes of describing the claimed subject matter, but one of ordinary skill in the art may recognize that many further combinations and permutations of the present invention are possible. Thus, the breadth and scope of the present invention should not be limited by any of the above described exemplary embodiments; rather the scope of at least one embodiment of the invention is defined only in accordance with the following claims and their equivalents.

## Claims

1. A method (300) to secure a user's (290) interaction with a remotely accessible computer-based application, the method comprising performing at a client computing device (230) the steps of:
capturing (310) a 2D-barcode that is being displayed on a display of the client computing device, wherein capturing the 2D-barcode comprises capturing a part or the entirety of what is being displayed on said display;
analyzing said part or said entirety to search in said part or said entirety for the presence of a 2D barcode;
upon detecting the presence of the 2D barcode, extracting (320) message data from the captured 2D-barcode;
determining (330) input data as a function of said extracted message data;
exchanging (340) commands and responses with a user's personal authentication device (100);
transferring (350) said determined input data to said user's personal authentication device.

2. The method of claim 1 wherein the user's personal authentication device (100) is locally connected to the client computing device (230) through a local wired or wireless digital data connection and wherein said exchanging commands and responses with a user's personal authentication device comprises sending the commands to the user's personal authentication device and receiving the responses from the user's personal authentication device over said digital data connection.

3. The method of claims 1 or 2 wherein the step of exchanging said commands and responses is done without the assistance of the user.

4. The method of any of the previous claims wherein exchanging commands and responses with a user's personal authentication device comprises sending to the user's personal authentication device at least part of the extracted message data.

5. The method of any of the previous claims further comprising performing at the client computing device the steps of:
receiving (360) from the user's personal authentication device authentication data that have been generated by the user's personal authentication device;
obtaining (370) a dynamic credential wherein the dynamic credential is a function of the received authentication data.

6. The method of claim 5 wherein said authentication data are comprised in said responses.

7. The method of claims 5 or 6 wherein the authentication data are generated by the user's personal authentication device using a cryptographic algorithm parameterized with a secret key that is stored in the personal authentication device.

8. The method of any of claims 5 to 7 wherein the dynamic credential is a function of at least part of the extracted message data.

9. The method of any of claims 5 to 8 wherein the authentication data have been generated by the user's personal authentication device as a function of said at least part of the extracted message data.

10. The method of any of claims 5 to 9 further comprising the step of making the obtained dynamic credential available for verification.

11. The method of claim 10 wherein making the obtained dynamic credential available for verification comprises displaying the obtained dynamic credential on the client computing device's display.

12. The method of claim 10 wherein making the obtained dynamic credential available for verification comprises forwarding the obtained dynamic credential to the remotely accessible computer-based application.

13. A system (200) comprising a client computing device (230) and a personal authentication device (100) locally connected to said client computing device through a local wired or wireless digital data connection, wherein:
the client computing device comprises a virtual scanner software component that, when executed on the client computing device, causes the client computing device to perform the steps of any of the previous method claims; and wherein
the personal authentication device is adapted to
receive said input data from the virtual scanner software component over said local wired or wireless digital data connection;
generate authentication data using said received input data.

14. The system of claim 13 wherein the personal authentication device is further adapted to return said generated authentication data to said client computing device.

15. A software component that, when executed on a client computing device, causes the client computing device to capture (310) a 2D-barcode that is being displayed on a display of the client computing device, wherein capturing the 2D-barcode comprises capturing a part or the entirety of what is being displayed on said display;
analyze said part or said entirety to search in said part or said entirety for the presence of a 2D barcode;
upon detecting the presence of the 2D barcode, extract (320) message data from the captured 2D-barcode;
exchange (340) commands and responses with a user's personal authentication device;
receive (360) from the user's personal authentication device authentication data that have been generated by the user's personal authentication device; and
obtain (370) a dynamic credential wherein the dynamic credential is a function of at least part of the extracted message data and the received authentication data.

## Patentansprüche

1. Verfahren (300) zur Sicherung einer Interaktion eines Benutzers (290) mit einer remote-zugreifbaren computerbasierten Anwendung, wobei das Verfahren ein Durchführen der folgenden Schritte an einer Client-Datenverarbeitungsvorrichtung (230) umfasst:
Erfassen (310) eines 2D-Strichcodes, der auf einer Anzeige der Client-Datenverarbeitungsvorrichtung angezeigt wird, wobei das Erfassen des 2D-Strichcodes ein Erfassen eines Teils oder der Gesamtheit dessen, was auf der Anzeige angezeigt wird, umfasst;
Analysieren des Teils oder der Gesamtheit, um in dem Teil oder der Gesamtheit auf das Vorliegen eines 2D-Strichcodes zu suchen;
bei Erkennen des Vorliegens des 2D-Strichcodes Extrahieren (320) von Nachrichtendaten aus dem erfassten 2D-Strichcode;
Bestimmen (330) von Eingabedaten als eine Funktion der extrahierten Nachrichtendaten;
Austauschen (340) von Befehlen und Antworten mit einer persönlichen Authentifizierungsvorrichtung (100) eines Benutzers;
Übertragen (350) der bestimmten Eingabedaten an die persönliche Authentifizierungsvorrichtung des Benutzers.

2. Verfahren nach Anspruch 1, wobei die persönliche Authentifizierungsvorrichtung (100) des Benutzers durch eine lokale drahtgebundene oder drahtlose digitale Datenverbindung lokal mit der Client-Datenverarbeitungsvorrichtung (230) verbunden ist und wobei das Austauschen von Befehlen und Antworten mit einer persönlichen Authentifizierungsvorrichtung eines Benutzers ein Senden der Befehle an die persönliche Client-Datenverarbeitungsvorrichtung und ein Empfangen der Antworten von der persönlichen Client-Datenverarbeitungsvorrichtung über die digitale Datenverbindung umfasst.

3. Verfahren nach Anspruch 1 oder 2, wobei der Schritt des Austauschens der Befehle und der Antworten ohne die Unterstützung des Benutzers vorgenommen wird.

4. Verfahren nach einem der vorherigen Ansprüche, wobei das Austauschen von Befehlen und Antworten mit einer persönlichen Authentifizierungsvorrichtung eines Benutzers ein Senden von mindestens einem Teil der extrahierten Nachrichtendaten an die persönliche Authentifizierungsvorrichtung des Benutzers umfasst.

5. Verfahren nach einem der vorherigen Ansprüche, weiterhin umfassend ein Durchführen der folgenden Schritte an der Client-Datenverarbeitungsvorrichtung:
Empfangen (360) von Authentifizierungsdaten, die von der persönlichen Authentifizierungsvorrichtung des Benutzers erzeugt wurden, von der persönlichen Authentifizierungsvorrichtung des Benutzers;
Erhalten (370) eines dynamischen Berechtigungsnachweises, wobei der dynamische Berechtigungsnachweis eine Funktion der empfangenen Authentifizierungsdaten ist.

6. Verfahren nach Anspruch 5, wobei die Authentifizierungsdaten in den Antworten enthalten sind.

7. Verfahren nach Anspruch 5 oder 6, wobei die Authentifizierungsdaten von der persönlichen Authentifizierungsvorrichtung des Benutzers unter Verwendung eines kryptografischen Algorithmus erzeugt werden, der mit einem geheimen Schlüssel parametrisiert ist, der in der persönlichen Authentifizierungsvorrichtung gespeichert ist.

8. Verfahren nach einem der Ansprüche 5 bis 7, wobei der dynamische Berechtigungsnachweis eine Funktion von mindestens einem Teil der extrahierten Nachrichtendaten ist.

9. Verfahren nach einem der Ansprüche 5 bis 8, wobei die Authentifizierungsdaten von der persönlichen Authentifizierungsvorrichtung des Benutzers als eine Funktion des mindestens einen Teils der extrahierten Nachrichtendaten erzeugt wurden.

10. Verfahren nach einem der Ansprüche 5 bis 9, weiterhin umfassend den Schritt des Verfügbarmachens des erhaltenen dynamischen Berechtigungsnachweises zur Verifizierung.

11. Verfahren nach Anspruch 10, wobei das Verfügbarmachen des erhaltenen dynamischen Berechtigungsnachweises zur Verifizierung ein Anzeigen des erhaltenen dynamischen Berechtigungsnachweises auf der Anzeige der Client-Datenverarbeitungsvorrichtung umfasst.

12. Verfahren nach Anspruch 10, wobei das Verfügbarmachen des erhaltenen dynamischen Berechtigungsnachweises zur Verifizierung ein Weiterleiten des erhaltenen dynamischen Berechtigungsnachweises an die remotezugreifbare computerbasierte Anwendung umfasst.

13. System (200), umfassend eine Client-Datenverarbeitungsvorrichtung (230) und eine persönliche Authentifizierungsvorrichtung (100), die durch eine lokale drahtgebundene oder drahtlose digitale Datenverbindung lokal mit der Client-Datenverarbeitungsvorrichtung verbunden ist, wobei:
die Client-Datenverarbeitungsvorrichtung eine virtuelle Scannersoftwarekomponente umfasst, die bei Ausführung auf der Client-Datenverarbeitungsvorrichtung bewirkt, dass die Client-Datenverarbeitungsvorrichtung die Schritte eines der vorherigen Verfahrensansprüche durchführt; und wobei
die persönliche Authentifizierungsvorrichtung eingerichtet ist zum
Empfangen der Eingabedaten von der virtuellen Scannersoftwarekomponente über die lokale drahtgebundene oder drahtlose digitale Datenverbindung;
Erzeugen von Authentifizierungsdaten unter Verwendung der empfangenen Eingabedaten.

14. System nach Anspruch 13, wobei die persönliche Authentifizierungsvorrichtung weiterhin dazu eingerichtet ist, die erzeugten Authentifizierungsdaten an die Client-Datenverarbeitungsvorrichtung zurückzusenden.

15. Softwarekomponente, die bei Ausführung auf einer Client-Datenverarbeitungsvorrichtung die Client-Datenverarbeitungsvorrichtung bewegt zum
Erfassen (310) eines 2D-Strichcodes, der auf einer Anzeige der Client-Datenverarbeitungsvorrichtung angezeigt wird, wobei das Erfassen des 2D-Strichcodes ein Erfassen eines Teils oder der Gesamtheit dessen, was auf der Anzeige angezeigt wird, umfasst;
Analysieren des Teils oder der Gesamtheit, um in dem Teil oder der Gesamtheit auf das Vorliegen eines 2D-Strichcodes zu suchen;
bei Erkennen des Vorliegens des 2D-Strichcodes Extrahieren (320) von Nachrichtendaten aus dem erfassten 2D-Strichcode;
Austauschen (340) von Befehlen und Antworten mit einer persönlichen Authentifizierungsvorrichtung eines Benutzers;
Empfangen (360) von Authentifizierungsdaten, die von der persönlichen Authentifizierungsvorrichtung des Benutzers erzeugt wurden, von der persönlichen Authentifizierungsvorrichtung des Benutzers; und
Erhalten (370) eines dynamischen Berechtigungsnachweises, wobei der dynamische Berechtigungsnachweis eine Funktion von mindestens einem Teil der extrahierten Nachrichtendaten und der empfangenen Authentifizierungsdaten ist.

## Revendications

1. Procédé (300) pour sécuriser une interaction d'utilisateur (290) avec une application assistée par ordinateur accessible à distance, le procédé comprenant l'exécution au niveau d'un dispositif informatique client (230) des étapes de :
capture (310) d'un code à barres 2D qui est affiché sur un afficheur du dispositif informatique client, dans laquelle la capture du code à barres 2D comprend la capture d'une partie ou de l'intégralité de ce qui est affiché sur ledit afficheur ;
l'analyse de ladite partie ou de ladite intégralité pour rechercher dans ladite partie ou ladite intégralité la présence d'un code à barres 2D ;
lors de la détection de la présence du code à barres 2D, l'extraction (320) de données de message à partir du code à barres 2D capturé ;
la détermination (330) de données d'entrée comme une fonction desdites données de message extraites ;
l'échange (340) d'ordres et de réponses avec un dispositif d'authentification personnelle d'utilisateur (100) ;
le transfert (350) desdites données d'entrée déterminées vers ledit dispositif d'authentification personnelle d'utilisateur.

2. Procédé selon la revendication 1, dans lequel le dispositif d'authentification personnelle d'utilisateur (100) est localement relié au dispositif informatique client (230) par l'intermédiaire d'une connexion locale de données numérique par câble ou sans fil et dans lequel ledit échange d'ordres et de réponses avec un dispositif d'authentification personnelle d'utilisateur comprend l'envoi des ordres au dispositif d'authentification personnelle d'utilisateur et la réception des réponses en provenance dudit dispositif d'authentification personnelle d'utilisateur sur ladite connexion de données numérique.

3. Procédé selon les revendications 1 ou 2, dans lequel l'étape d'échange desdits ordres et réponses est effectuée sans l'aide de l'utilisateur.

4. Procédé selon l'une quelconque des revendications précédentes, dans lequel l'échange d'ordres et de réponses avec un dispositif d'authentification personnelle d'utilisateur comprend l'envoi au dispositif d'authentification personnelle d'utilisateur d'au moins une partie des données de message extraites.

5. Procédé selon l'une quelconque des revendications précédentes, comprenant en outre l'exécution au niveau du dispositif informatique client des étapes de :
réception (360) en provenance du dispositif d'authentification personnelle d'utilisateur de données d'authentification qui ont été produites par le dispositif d'authentification personnelle d'utilisateur ;
obtention (370) d'un justificatif d'identité dynamique dans lequel le justificatif d'identité dynamique est une fonction des données d'authentification reçues.

6. Procédé selon la revendication 5, dans lequel lesdites données d'authentification sont comprises dans lesdites réponses.

7. Procédé selon les revendications 5 ou 6, dans lequel les données d'authentification sont produites par le dispositif d'authentification personnelle d'utilisateur en utilisant un algorithme cryptographique paramétré avec une clé secrète qui est stockée dans le dispositif d'authentification personnelle.

8. Procédé selon l'une quelconque des revendications 5 à 7, dans lequel le justificatif d'identité dynamique est une fonction d'au moins une partie des données de message extraites.

9. Procédé selon l'une quelconque des revendications 5 à 8, dans lequel les données d'authentification ont été produites par le dispositif d'authentification personnelle d'utilisateur comme une fonction de ladite au moins une partie des données de message extraites.

10. Procédé selon l'une quelconque des revendications 5 à 9, comprenant en outre l'étape consistant à rendre le justificatif d'identité dynamique obtenu disponible pour vérification.

11. Procédé selon la revendication 10, dans lequel le fait de rendre le justificatif d'identité dynamique obtenu disponible pour vérification comprend l'affichage du justificatif d'identité dynamique obtenu sur l'afficheur de dispositif informatique client.

12. Procédé selon la revendication 10, dans lequel le fait de rendre le justificatif d'identité dynamique obtenu disponible pour vérification comprend le réacheminement du justificatif d'identité dynamique obtenu à l'application assistée par ordinateur accessible à distance.

13. Système (200) comprenant un dispositif informatique client (230) et un dispositif d'authentification personnelle (100) localement relié audit dispositif informatique client par l'intermédiaire d'une connexion locale de données numérique par câble ou sans fil, dans lequel :
le dispositif informatique client comprend un composant logiciel de scanner virtuel qui, lorsqu'il est exécuté sur le dispositif informatique client, amène le dispositif informatique client à effectuer les étapes selon l'une quelconque des revendications précédentes de procédé ; et dans lequel
le dispositif d'authentification personnelle est conçu pour
recevoir lesdites données d'entrée à partir du composant logiciel de scanner virtuel sur ladite connexion locale de données numérique par câble ou sans fil ;
produire des données d'authentification en utilisant lesdites données d'entrée reçues.

14. Système selon la revendication 13, dans lequel le dispositif d'authentification personnelle est en outre conçu pour renvoyer lesdites données d'authentification produites audit dispositif informatique client.

15. Composant logiciel qui, lorsqu'il est exécuté sur un dispositif informatique client, amène le dispositif informatique client à
capturer (310) un code à barres 2D qui est affiché sur un afficheur du dispositif informatique client, dans lequel la capture du code à barres 2D comprend la capture d'une partie ou de l'intégralité de ce qui est affiché sur ledit afficheur ;
analyser ladite partie ou ladite intégralité pour rechercher dans ladite partie ou ladite intégralité la présence d'un code à barres 2D ;
lors de la détection de la présence du code à barres 2D, extraire (320) des données de message à partir du code à barres 2D capturé ;
échanger (340) des ordres et des réponses avec un dispositif d'authentification personnelle d'utilisateur ;
recevoir (360) en provenance du dispositif d'authentification personnelle d'utilisateur des données d'authentification qui ont été produites par le dispositif d'authentification personnelle d'utilisateur ; et
obtenir (370) un justificatif d'identité dynamique dans lequel le justificatif d'identité dynamique est une fonction d'au moins une partie des données de message extraites et des données d'authentification reçues.
